# EUROPEAN PATENT APPLICATION

(11) **EP 2 945 210 A1**
(43) Date of publication of application: **18.11.2015**
(21) Application number: 14168737.6
(22) Date of filing: 16.05.2014
(51) Int. Cl.: H01M 4/38, H01M 4/90, H01M 12/06

(54) **Inorganic compounds as a cathode material for lithium/air batteries**

(71) Applicant: ROBERT BOSCH GMBH, 70442 Stuttgart (DE); FM LAB, Moscow 124498 (RU)
(72) Inventor: Itkis, Daniil, 141980 Dubna (RU); Kozmenkova, Anna, 249033 Obninsk (RU); Heckel, Olga, 75397 Simmozheim (DE)
(74) Representative: Hörschler, Wolfram Johannes

(57) **Abstract**

The present invention is related to a material for an electrode of a lithium-air-battery cell, particularly for a cathode and the use of said material. Said material contains binary inorganic compounds and/or ternary inorganic compounds.

## Description

### Prior art

The present invention relates to inorganic compounds, particularly as a cathode material for an electrode assembly for lithium/air batteries.

US 5,510,209 is related to a solid polymer electrolyte-based oxygen battery. A polymer-based battery comprises metal anodes and an oxygen gas cathode. The oxygen is not stored in the battery rather it accesses from the environment. The solid-state battery is constructed by sandwiching a metal ion-conductive polymer electrolyte film between a metal anode (negative electrode) and a composite carbon electrode which serves as the cathode current collector, on which the electro-active oxygen is reduced during discharge of the battery to generate electric current. The metal anodes include lithium, magnesium, sodium, calcium, aluminum and zinc.

US 2013/0029234 A1 is related to porous carbonaceous composite material, a positive electrode and lithium air battery including porous carbonaceous composite material and a method of preparing the same. The porous carbonaceous composite material comprises a core, which in turn comprises a carbon nanotube. Further, said porous carbonaceous composite material includes a coating layer on the core, the coating layer comprising a carbonaceous material comprising a hetero element. The coating layer is disposed in at least a portion of the core. The core comprises a plurality of carbon nanotubes which define a pore between the plurality of carbon nanotubes.

US 5,888,669 is related to a transition metal-based ceramic material and articles fabricated therefrom. A non-oxide, transition metal-based ceramic material has the general formula A_{y}M₂Zₓ, wherein A is a group IA element, M is a transition metal and Z is selected from the group consisting of N, C, B, Si, and combinations thereof, and wherein x ≤ 2 and y ≤ 6-x. In these materials, the group IA element occupies interstitial sites in the metallic lattice, and may be readily inserted into or released therefrom. The materials may be used as catalysts and as electrodes. Also disclosed herein are methods for the fabrication of the materials.

DE 10 2011 053 782 A1 is related to a lithium/air battery. Said lithium/oxygen battery comprises a number of electrochemical cells comprising a double anode having an anode contacting element of an electrical conductive and for lithium ions non-permeable material, two anode fuel cells, entirely or partially made of metallic lithium and arranged on opposite sides of the anode contacting element. Further, two separation elements are provided of a water- and gas-tight material, having a conductivity for lithium-ions, each of said separation elements arranged such that it in cooperation with the anode conducting elements entirely mantles one of said anode fuel cells. Two cathodes arranged on opposite sides of the double anode having contact to each of said separation elements, each comprising a cathode contact element made of an electrical conductive material and further, an oxygen electrode element arranged on the cathode contacting element having a porous structure comprising a catalysator for the generation and dissolution of lithium oxide, said oxide electrode element being in contact with one of said separator elements of the double anode.

A promising battery technology currently under development which can achieve a high specific energy is the lithium/air or the lithium/oxygen system. Operation of lithium/air cells, typically containing a metallic lithium anode and an oxygen cathode is based on a conversion reaction, unlike lithium/ion technology, what in turn provides a high specific capacity.

A system with a metallic lithium anode and an oxygen cathode is disclosed in US 5,510,209 A. An overview of current challenges for the lithium/air battery technology is published by Jake Christensen et al. in Journal of the Electrochemical Society, 159(2) R1-R30, in 2012. Different types of porous carbon or modified carbon, to name but a few carbon black, graphite, carbon nanotubes, carbon nanofibers, mesoporous carbon, graphene, doped carbons, are commonly used as cathode material for lithium/air battery systems due to their high electric conductivity and their oxygen adsorption properties. In the present context, oxygen adsorption property means that an oxygen reduction reaction (ORR) is likely to occur on the materials listed above. Still further, said materials have a very low specific weight and a sufficient chemical stability at room temperature. Carbon cathode materials for the lithium/air battery system are disclosed in US 2013/0029234 A1. Recently, it was found that lithium carbonates are formed on carbon electrode materials, for instance, the publication McCloskey, B. D. et al., J. Phys. Chem. Lett. 3, 997-1001, 2012. To avoid this side reaction, that over the long run leads to electrode passivation and an irreversible carbon consumption during battery cell recharge, porous gold and TiC were suggested as an electrode material according to the publication Peng, Z., Freunberger, S. A., Chen, Y. & Bruce, P. G., Science 337, 563-566 (2012) and Thotiyl, M. M. O. et al., Nat Mater 12, 1-7, 2013.

The technical problem involved is that despite its usual inertness, carbon undergoes a chemical oxidation by intermediate superoxide anion radicals, generated during an oxygen reduction reaction (ORR), while discharging takes place. Such an attack on a carbon electrode results in lithium carbonate formation along with lithium peroxide, provided a non-aqueous, non-carbonate electrolyte is present. Upon a charging process which follows to recharge the battery cell, this lithium air battery cell having a carbon cathode typically is accompanied by carbon dioxide release as a result of lithium carbonate decomposition. Over the entire operation cycle of such a battery cell, i.e. the lithium/air battery cell system, this process would mean the exhaustion of the carbon cathode. Alternative materials for cathodes of the lithium/air battery system are noble metals, e.g. Au, Pt, which could be used alternatively, however, said inert noble metals have a high specific weight and come along with high costs, particularly Au. This forms a significant obstacle for the commercialization of lithium/air battery cells if inert noble metals are used as cathode material.

### Summary of the invention

In view of the technical problem sketched above, it is one objective of the present invention to provide for alternative materials which are suitable for a cathode of a battery cell, particularly of a battery cell according to the lithium/air battery system.

According to the present invention, a material for an electrode of a lithium/air battery system, particularly a lithium/air battery cell, is disclosed as cathode material, said material containing binary inorganic compounds and/or ternary inorganic compounds.

Said binary inorganic compounds are selected from the group containing transition metals and rare earth metal borides, carbides, nitrides, silicides, including TiB₂, ZrB₂, HfB₂, VB₂, NbB₂, TaB₂, CrB₂, MoB₂, Mo₂B₅, WB₂, W₂B₅, LaB₆, ThB₆, TiC, ZrC, HfC, VC, NbC, TaC, Cr₃C₂, Mo₂C, WC, ScC, TiN, ZrN, HfN, VN, NbN, TaN, CrN, Cr₂N, MoN, Mo₂N, WN, W₂N, CeN, TiSi₂, ZrSi₂, HfSi₂, VSi₂, NbSi₂, TaSi₂, CrSi₂, MoSi₂, WSi₂.

Said ternary inorganic compounds are selected from the group comprising perovskites, including LaNiO₃. Besides said binary or ternary inorganic components, the cathode material further includes a binder or binding agent and may include a catalyst. Both components, i.e. said binder or binding agent and said catalyst, are included with the cathode material with less than 10% per weight. When both compounds are present in the cathode material, i.e. said binary inorganic compound as well as said ternary inorganic compound, one of said compounds may constitute the catalyst.

The material according to the present invention is porous, meso-porous and nano-sized materials. In said pores of the material, electrolyte is present, which, however, leaves said pores or voids upon a discharging cycle.

Said material according to the present invention is hierarchically structured. This means that layers of material are superimposed one above another. For instance, one layer may be formed of microparticles, which in turn are formed of 100 (example only) spherical particles, said spherical particles in turn are formed of crumpled nano-wires, to name an example. Said hierarchically structures are 3-dimensional structures, formed of 2-dimensional structures, such as wires or fibers, which in turn are made of one-dimensional structures, such as particles.

The present invention likewise is directed to the use of the materials according to the present invention as cathode material for a lithium-air-battery-cell, lithium-air-battery module and/or a lithium-air-battery-pack used as traction battery in a hybrid electrical vehicle (HEV), a plug-in hybrid vehicle (PHEV), or an electric vehicle (EV).

### Advantages of the invention

The materials disclosed in the present invention have an efficient chemical stability towards active reduced oxygen species, which carbon materials do not have as discussed above. The materials according to the present invention, i.e. said binary inorganic compounds and said ternary inorganic compounds have a electrochemical oxidative stability as well as a high electrical conductivity. Still further, they offer to a certain degree an oxygen adsorption possibility, so that an oxygen reduction reaction (ORR) occurs in a lithium-air-battery-cell or lithium-air-battery-module or lithium-air-battery-pack for use as a secondary battery in a hybrid electrical vehicle, a plug-in hybrid electrical vehicle or an electrical vehicle. Still further, the materials according to the invention have a low specific weight which is essential for a battery system when used in automotive applications. Still further, the materials according to the present invention, i.e. particularly said binary inorganic compounds, can be manufactured so that they either adopt a porous, a meso-porous shape, exhibiting a very high voidage ratio, crucial for accommodation of the discharge product of a battery cell.

Said materials possess a much higher, i.e. 10 to 100 times higher electric conductivity when compared with carbon. Some of the binary inorganic compounds and/or ternary inorganic compounds have rather low specific weight. Moreover, most of these materials according to the present invention exhibit better chemical and electrochemical stability towards oxidation under battery operation conditions as compared to a carbon material.

### Brief description of the drawings

The present invention is further described by the accompanying drawings, wherein
- Figure 1: shows a cyclic voltammogram for lithium-air battery cells with a glassy carbon working electrode and
- Figure 2: shows a cyclic voltammogram for a lithium-air cell with a titanium carbide working electrode.

Both voltammograms show the current density in mA/cm² vs. Potential vs. Lithium/Lithium⁺, Volt, i.e. reference numeral 12 in volt. In both Figures, potential sweep rate is 100 mV/s, potentials are measured vs. a lithium foil which is soaked in 1M LiClO₄ in PC:DME mixture (7:3 vol.).

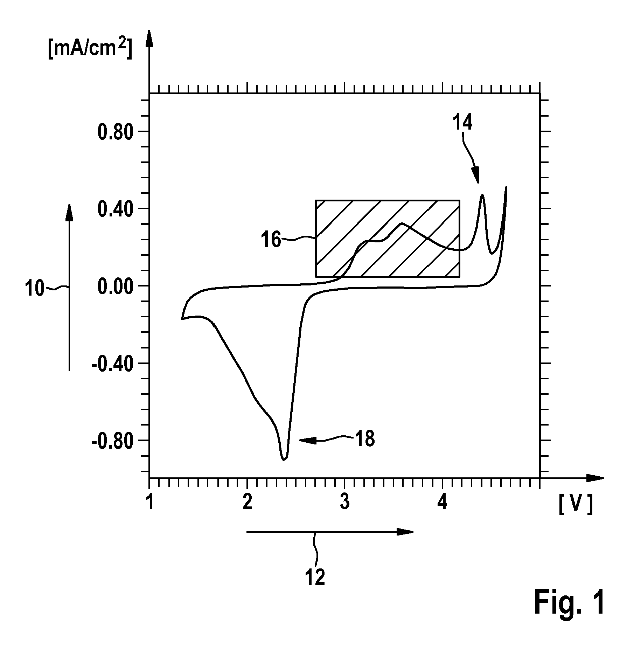

According to Figure 1, a non-aqueous lithium-air-battery cell is used with a standard flat glass carbon cathode. Said lithium-air-battery cell was analyzed by cyclic voltammetry method. Along with peaks corresponding to oxygen reduction (ORR) and oxygen evolution (OER) processes, an anode peak corresponding to lithium carbonate decomposition 14 was observed as depicted in Figure 1. Due to the carbonate decomposition 14 as shown in Figure 1, the current density of said battery cell only was 0.4 mA/cm² as a maximum value.

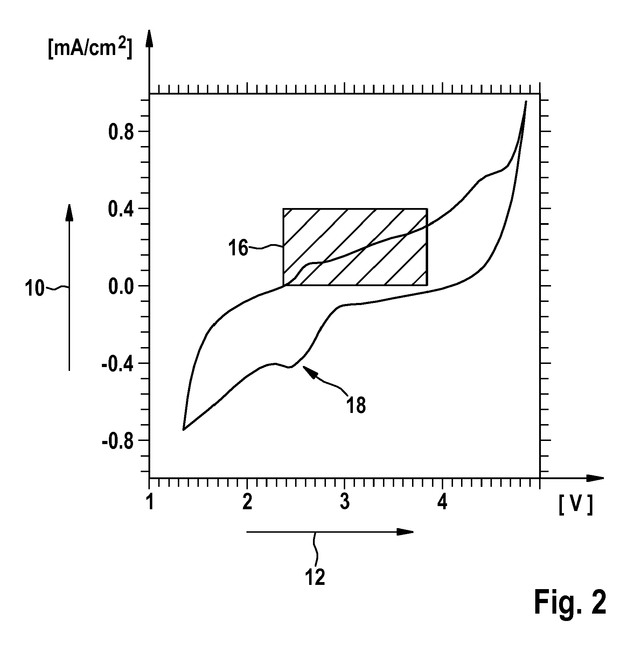

Figure 2 shows a lithium-air-battery cell according to the present invention, a flat titanium carbide cathode was used as cathode material in this lithium-air-battery cell. Said carbide cathode was manufactured by sputtering of TiC target on an aluminum substrate. A non-aqueous lithium-air-battery cell system was prepared with a flat titanium carbide cathode. Said battery cell was analyzed by cyclic voltammetry method. Peaks 16 and 18, respectively, corresponding to an oxygen reduction reaction (ORR) as well as an oxygen evolution reaction (OER) were observed according to the cyclic voltammogram as given in Figure 2.

The current density achieved with a titanium carbide cathode material according to Figure 2 was with respect to its maximum value 0.8 mA/cm², i.e. nearly twice as much when compared to the lithium-air-battery system given in Figure 1. In both Figures, potential sweep rate was 100 mV/s and the potential has been measured vs. a lithium foil, i.e. both measurements have been taken in battery cells with equal surrounding conditions except for the cathode material.

## Claims

1. Material for an electrode of a lithium-air-battery cell, particularly for a cathode, wherein said material contains binary inorganic compounds and/or ternary inorganic compounds.

2. Material according to claim 1, wherein said binary inorganic compounds are selected from the group containing transition metals, rare earth metal borides, carbides, nitrides, silicides.

3. Material according to claim 2, whrerein said group comprises TiB₂, ZrB₂, HfB₂, VB₂, NbB₂, TaB₂, CrB₂, MoB₂, Mo₂B₅, WB₂, W₂B₅, LaB₆, ThB₆, TiC, ZrC, HfC, VC, NbC, TaC, Cr₃C₂, Mo₂C, WC, ScC, TiN, ZrN, HfN, VN, NbN, TaN, CrN, Cr₂N, MoN, Mo₂N, WN, W₂N, CeN, TiSi₂, ZrSi₂, HfSi₂, VSi₂, NbSi₂, TaSi₂, CrSi₂, MoSi₂, WSi₂.

4. Material according to claim 1, wherein said ternary inorganic compounds are selected from the group comprising perovskites, including LaNiO₃.

5. Material according to one of the preceding claims, wherein said material is porous or meso-porous or nano-sized materials.

6. Material according to one of the preceding claims, wherein said material is hierarchically structured in that a 3-dimensional structure is made of a 2-dimensional structure which is made of a 1-dimensional structure.

7. Material according to one of the preceding claims, wherein said material is formed as rod, wire, fibre, powder, 3D structure.

8. Use of the material according to one of claims 1 to 7 as cathode material of a lithium-air-battery cell, a lithium-air-battery module or a lithium-air-battery pack as a traction battery of a hybrid electric vehicle (HEV), a plug-in hybrid electric vehicle (PHEV), or an electric vehicle (EV).
